(19) Europäisches Patentamt
European Patent Office
Office européen des brevets

(11) **EP 1 600 889 A1**

(12) **EUROPEAN PATENT APPLICATION**

(43) Date of publication:
**30.11.2005 Bulletin 2005/48**

(51) Int Cl.[7]: **G06T 5/00**, G06K 9/20

(21) Application number: **05250250.7**

(22) Date of filing: **19.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.05.2004 KR 2004036393**

(71) Applicant: **SAMSUNG ELECTRONICS CO., LTD.**
**Suwon-si, Gyeonggi-do 442-742 (KR)**

(72) Inventors:
• **Jung, Cheolkon**
**Jangan-gu Suwon-si Gyeonggi-do (KR)**

• **Moon, Youngsu**
**Yangcheon-gu Seoul (KR)**
• **Kim, Jiyeun**
**Songpa-gu Seoul (KR)**

(74) Representative: **Ertl, Nicholas Justin**
**Elkington and Fife LLP,**
**Prospect House,**
**8 Pembroke Road**
**Sevenoaks, Kent TN13 1XR (GB)**

(54) **Apparatus and method for extracting character(s) from image**

(57) Provided is an apparatus and method for extracting character(s) from an image. The apparatus includes a mask detector detecting a height of a mask indicating a character(s) region from spatial information of the image created when detecting a caption region comprising the character(s) region and a background region from the image and a character(s) extractor extracting character(s) from the character(s) region corresponding to the height of the mask. The spatial information includes an edge gradient of the image. Therefore, the apparatus extracts important information from an image and can recognize small character(s) that is not recognizable using conventional methods. In addition, an image can be more accurately identified, summarized, searched, and indexed according to contents by recognizing extracted character(s). Further, the apparatus enables faster character(s) extraction.

## FIG. 1

**Description**

BACKGROUND OF THE INVENTION

The present invention relates to image processing, and more particularly to an apparatus and method for extracting character(s) from an image.

Conventional methods of extracting character(s) from an image include thresholding, region-merging, and clustering methods.

The thresholding method undermines the performance of character(s) extraction since it is difficult to apply a given threshold value to all images. Variations of the thresholding method are disclosed in U.S. Patent Nos. 6,101, 274 and 6,470,094, Korean Patent Publication No. 1999-47501, and a paper entitled "A Spatial-temporal Approach for Video Caption Detection and Recognition," IEEE Trans. on Neural Network, vol. 13, no. 4, July 2002, by Tang, Xinbo Gao, Jianzhuang Liu, and Hongjiang Zhang.

The region-merging method requires a lot of calculating time to merge regions with similar averages after segmenting an image, thereby providing low-speed character(s) extraction. The region-merging method is disclosed in a paper entitled "Character Segmentation of Color Images from Digital Camera," Document Analysis and Recognition, 2001, Proceedings, and Sixth International Conference on, pp. 10-13, September 2001, by Kongqiao Wang, Kangas, J.A, and Wenwen Li.

Variations of the clustering method are disclosed in papers entitled "A New Robust Algorithm for Video Character Extraction," Pattern Recognition, vol. 36, 2003, by K. Wong and Minya Chen, and "Study on News Video Caption Extraction and Recognition Techniques," the Institute of Electronics Engineers of Korea, vol. 40, part SP, no.1, January 2003, by Jong-ryul Kim, Sung-sup Kim, and Young-sik Moon.

These methods have a drawback in that small character(s) cannot be recognized because OCR(Optical Character Recognition) cannot recognize character(s) with a height of equal to or less than 20-30 pixels.

SUMMARY OF THE INVENTION

According to an aspect of the present invention, there is provided an apparatus for extracting character(s) from an image. The apparatus includes a mask detector detecting a height of a mask indicating a character(s) region from spatial information of the image created when detecting a caption region comprising the character(s) region and a background region from the image; and a character(s) extractor extracting character(s) from the character(s) region corresponding to the height of the mask. The spatial information may include an edge gradient of the image.

The present invention thus provides an apparatus for extracting character(s) from an image, which is capable of extracting and recognizing small character(s).

According to another aspect of the present invention, there is provided a method of extracting character(s) from an image. The method includes obtaining a height of a mask indicating a character(s) region from spatial information of the image created when detecting a caption region comprising the character(s) region and a background region from the image; and extracting the character(s) from the character(s) region corresponding to the height of the mask. The spatial information may include an edge gradient of the image.

The present invention thus also provides a method of extracting character(s) from an image, which is capable of extracting and recognizing small character(s).

BRIEF DESCRIPTION OF THE DRAWINGS

The above and other features and advantages of the present invention will become more apparent by describing in detail exemplary embodiments thereof with reference to the attached drawings in which:

FIG. 1 is a block diagram of an apparatus for extracting character(s) from an image according to an embodiment of the present invention;

FIG. 2 is a flowchart illustrating a method of extracting character(s) from an image according to an embodiment of the present invention;

FIG. 3 is a block diagram of a mask detector illustrated in FIG. 1 according to an embodiment of the present invention;

FIGS. 4(a) though 4(c) are views for better understanding a process of generating an initial mask;

FIGS. 5(a) and 5(b) are views for better understanding the operation of a line detector illustrated in FIG. 3;

FIG. 6 is an exemplary graph for a better understanding of a time average calculator illustrated in FIG. 1;

FIG. 7 is a block diagram of a character(s) extractor according to an embodiment of the present invention;

FIG. 8 is a flowchart illustrating Operation 46 in FIG. 2 according to an embodiment of the present invention;

FIG. 9 is a block diagram of a character(s) extractor according to another embodiment of the present invention;

FIG. 10 is a graph illustrating a cubic function;

FIG. 11 is a one-dimensional graph illustrating an interpolation pixel and neighboring pixels;

FIG. 12 illustrates a sharpness unit according to an embodiment of the present invention;

FIG. 13 is a block diagram of a second binarizer of FIG. 7 or 9 according to an embodiment of the present invention;

FIG. 14 is a flowchart illustrating a method of operating the second binarizer of FIG. 7 or 9 according to an embodiment of the present invention;

FIG. 15 is an exemplary histogram according to an embodiment of the present invention;

FIG. 16 is a block diagram of a third binarizer according to an embodiment of the present invention;

FIG. 17 is a flowchart illustrating Operation 164 according to an embodiment of the present invention;

FIG. 18 is a block diagram of a noise remover according to an embodiment of the present invention; and

FIGS. 19 (a) through (d) illustrate an input and an output of the character(s) extractor and the noise remover illustrated in FIG. 7.

## DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth therein; rather, these embodiments are provided so that this disclosure will be thorough and complete, and will fully convey the concept of the invention to those skilled in the art.

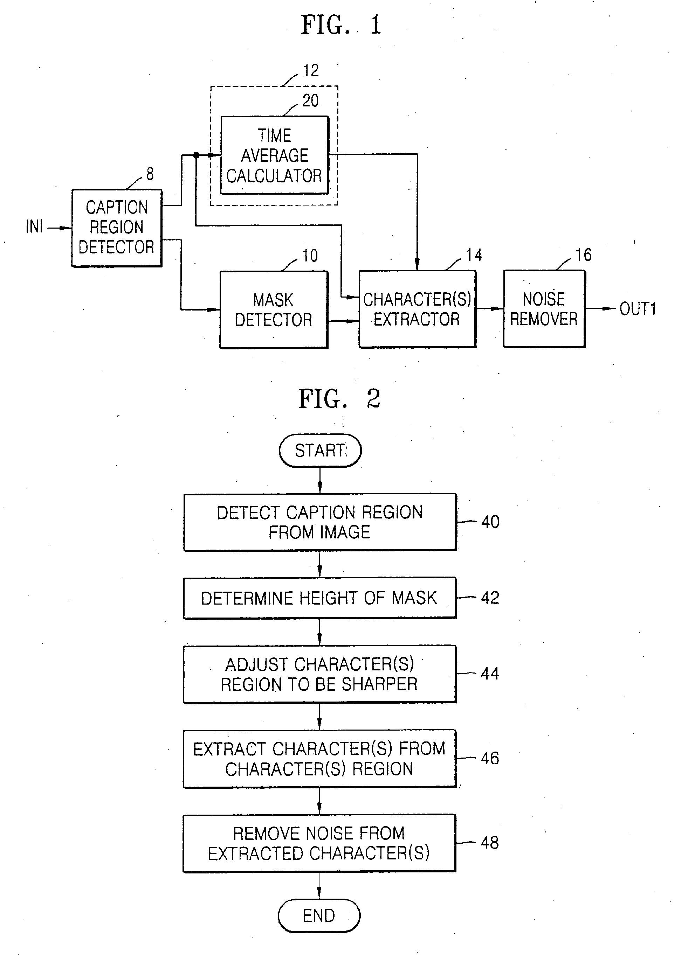

FIG. 1 is a block diagram of an apparatus for extracting character(s) from an image according to an embodiment of the present invention. Referring to FIG. 1, the apparatus includes a caption region detector 8, a mask detector 10, a first sharpness adjuster 12, a character(s) extractor 14, and a noise remover 16.

FIG. 2 is a flowchart illustrating a method of extracting character(s) from an image according to an embodiment of the present invention. The method includes operations of extracting character(s) from a character(s) region using a height of a mask (Operations 40 through 46) and removing noise from the extracted character(s) (Operation 48).

The caption region detector 8 detects a caption region of an image input via an input terminal IN1 and outputs spatial information of the image created when detecting the caption region to the mask detector 10 (Operation 40). Here, the caption region includes a character(s) region composed of only character(s) and a background region that is in the background of a character(s) region. Spatial information of an image denotes an edge gradient of the image. Character(s) in the character(s) region may be character(s) contained in an original image or superimposed character(s) intentionally inserted into the original image by a producer. A conventional method of detecting a caption region from a moving image is disclosed in Korean Patent Application No. 2004-10660.

After Operation 40, the mask detector 10 determines the height of the mask indicating the character(s) region from the spatial information of the image received from the caption region detector 8 (Operation 42).

The apparatus of FIG. 1 need not include the caption region detector 8 and may include only the mask detector 10, the first sharpness adjuster 12, the character(s) extractor 14, and the noise remover 16.

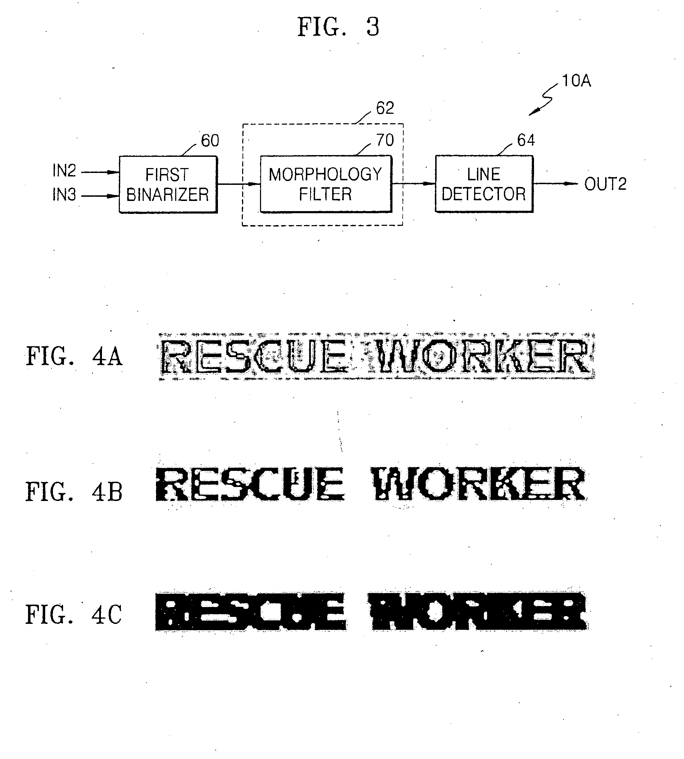

FIG. 3 is a block diagram of a mask detector 10A according to an embodiment of the present invention. The mask detector 10A includes a first binarizer 60, a mask generator 62, and a line detector 64.

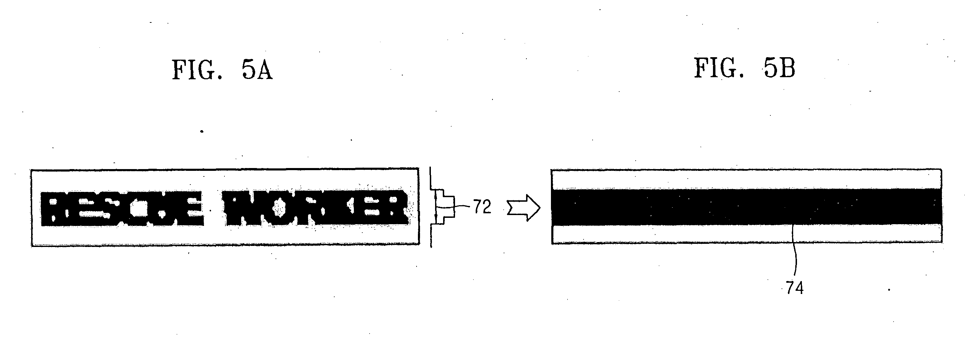

FIGS. 4(a) though 4(c) are views for better understanding a process of generating an initial mask. FIGS. 4(a) through 4(c) include a character(s) region, "rescue worker," and a background region thereof. For a better understanding of the mask detector 10A of FIG. 3, it is assumed that character(s) included in the character(s) region is "rescue worker." The configuration and an operation of the mask detector 10A of FIG. 3 will now be described with reference to FIGS. 4 (a) through 4(c). However, the present invention is not limited to this configuration.

The first binarizer 60 binarizes spatial information illustrated in FIG 4(a) received from the caption region detector 8 via an input terminal IN2 by using a first threshold value $TH_1$ and outputs the binarized spatial information illustrated in FIG. 4(b) to the mask generator 62.

The mask generator 62 removes holes in the character(s) of the image from the binarized spatial information of FIG. 4(b) received from the first binarizer 60 and outputs the result illustrated in FIG. 4(c) to the line detector 64 as an initial mask. Here, the holes in the character(s) denote white spaces within the black character(s) "rescue worker" illustrated in FIG. 4(b). The initial mask indicates the black character(s) "rescue worker" not including the white background region, as illustrated in FIG. 4(c).

According to an embodiment of the present invention, the mask generator 62 may be a morphology filter 70 morphology-filtering the binarized spatial information received from the first binarizer 60 and outputting the result of the morphology-filtering as an initial mask. The morphology filter 70 may generate an initial mask by performing a dilation method on the binarized spatial information output from the first binarizer 60. The morphology filtering and dilation methods are disclosed in "Machine Vision," McGraw-Hill, pp. 61-69, 1995, by R. Jain, R. Kastuni, and B.G.

Schunck.

FIGS. 5(a) and 5(b) are views for better understanding the operation of the line detector 64 illustrated in FIG. 3. FIG. 5(a) illustrates the initial mask shown in FIG. 4(c), and FIG. 5(b) illustrates a character(s) line.

The line detector 64 detects a height 72 of the initial mask illustrated in FIG. 5(a) received from the mask generator 62 and outputs the result of the detection via an output terminal OUT2. The line detector 64 detects a character(s) line 74 illustrated in FIG. 5(b) indicating a width that is the height 72 of the initial mask, and outputs the detected character(s) line 74 via the output terminal OUT2. The character(s) line 74 indicates image of parts including at least the text region in the caption region and does not include character(s).

After Operation 42, the first sharpness adjuster 12 adjusts the sharpness of the character(s) region of the caption region received from the caption region detector 8 and outputs the character(s) region with adjusted sharpness to the character(s) extractor 14 (Operation 44). To this end, the caption region detector 8 detects the caption region of the image input via the input terminal IN1 and outputs the detected caption region to the first sharpness adjuster 12 as time information of the image.

After Operation 44, the character(s) extractor 14 extracts character(s) from the character(s) region with the adjusted sharpness received from the first sharpness adjuster 12 (Operation 46).

According to an embodiment of the present invention, unlike as illustrated in FIG. 2, Operation 44 may be performed before Operation 42. In this case, Operation 46 is performed after Operation 42. In addition, Operations 42 and 44 may be performed simultaneously after Operation 40.

According to an embodiment of the present invention, the first sharpness adjuster 12 illustrated in FIG. 1 may be a time average calculator 20. The time average calculator 20 receives caption regions with same character(s) from the caption region detector 8 and calculates the average of luminance levels of the caption regions over time by,

$$\overline{R} = \frac{1}{N_f} \sum R_t \qquad \ldots(1)$$

where $\overline{R}$ denotes an average of luminance level over time, $N_f$ denotes the number of caption frames having the same character(s), and $R_t$ denotes the luminance level of a caption region in a $t^{th}$ frame.

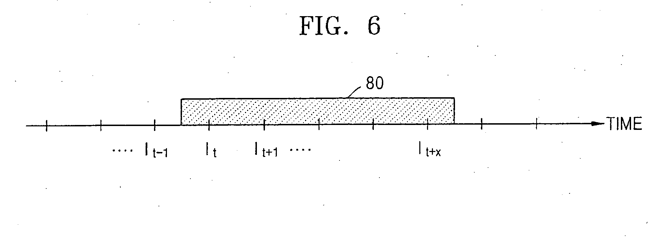

FIG. 6 is an exemplary graph for a better understanding of the average time calculator 20 illustrated in FIG. 1. Referring to FIG. 6, a plurality of I-frames (...$I_{t-1}$, It, $I_{t+1}$, ...$I_{t+x}$...) are considered. Here, $I_{t+x}$ denotes a t+$X^{th}$ I-frame, and X is an integer.

For example, if all of the $t^{th}$ through t+$X^{th}$ I-frames It through $I_{t+X}$ 80 include caption regions having the same character(s), $N_f$ in Equation 1 is X+1.

When the luminance levels of the caption regions having the same character(s) are averaged over time, the character(s) becomes clearer because areas other than the character(s) in the caption regions include random noise.

When the first sharpness adjuster 12 is implemented as the time average calculator 20, the character(s) extractor 14 extracts character(s) from the character(s) region having, as a luminance level, an average calculated by the time average calculator 20.

Unlike the apparatus of FIG. 1, an apparatus for extracting character(s) from an image according to another embodiment of the present invention may not include the first sharpness adjuster 12. In other words, Operation 44 in the method illustrated in FIG. 2 may be omitted. In this case, after Operation 42, the character(s) extractor 14 extracts character(s) from a character(s) region corresponding to a height of a mask received from the caption region detector 8 (Operation 46). Thus, except that the character(s) region is input by the caption region detector 8 instead of the first sharpness adjuster 12, the operation of the character(s) extractor 14 when the first sharpness adjuster 12 is not included is the same as when the first sharpness adjuster 12 is included.

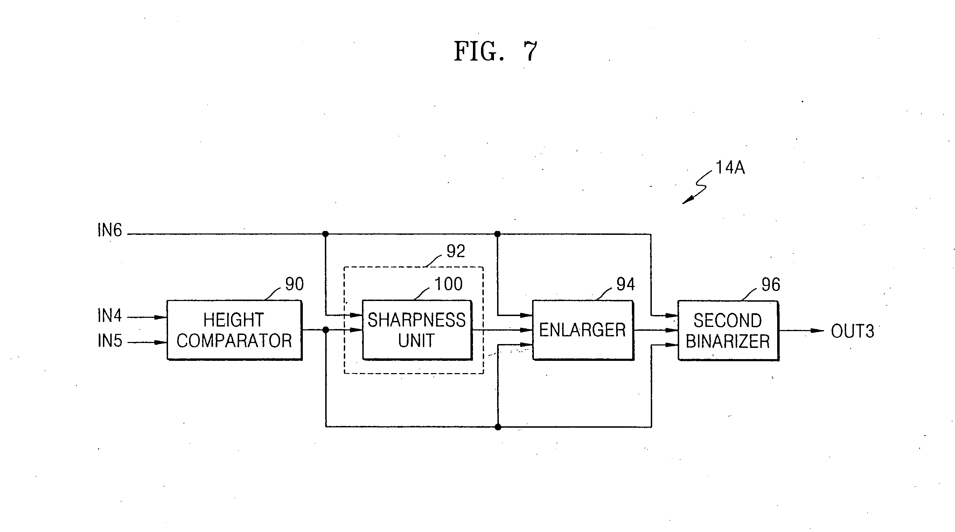

FIG. 7 is a block diagram of a character(s) extractor 14A according to an embodiment of the present invention. The character(s) extractor 14A includes a height comparator 90, a second sharpness adjuster 92, an enlarger 94, and a second binarizer 96.

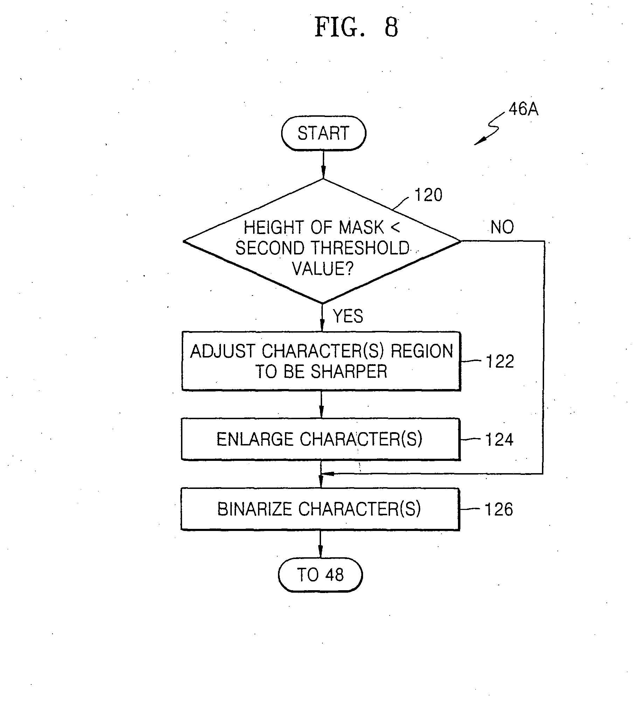

FIG. 8 is a flowchart illustrating Operation 46A according to an embodiment of the present invention. Operation 46A includes operations of sharpness and enlarging character(s) according to a height of a mask (Operations 120 through 124) and binarizing the character(s) (Operation 126).

The height comparator 90 compares the height of the mask received from the mask detector 10 via an input terminal IN4 with a second threshold value $TH_2$ received via an input terminal IN5 and outputs as a control signal a result of the comparison to both the second sharpness adjuster 92 and the second binarizer 96. The second threshold value $TH_2$ may be stored in the height comparator 90 in advance rather than being received externally. For example, the height comparator 90 can determine whether the height of the mask is less than the second threshold value $TH_2$ and output the result of the determination as the control signal (Operation 120).

In response to the control signal generated by the height comparator 90, the second sharpness adjuster 92 adjusts the character(s) region to be sharper and outputs the character(s) region with adjusted sharpness to the enlarger 94. For example, when the second sharpness adjuster 92 determines that the height of the mask is less than the second threshold value $TH_2$ in response to the control signal received from the height comparator 90, the second sharpness adjuster 92 increases the sharpness of the character(s) region (Operation 122). To this end, the second sharpness adjuster 92 receives a character(s) line from the mask detector 10 or the caption region detector 8 via an input terminal IN6 and a character(s) region and a background region within a scope indicated by the character(s) line from the first sharpness adjuster 12.

After Operation 122, the enlarger 94 enlarges the character(s) included in the character(s) region with their sharpness adjusted by the second sharpness adjuster 92 and outputs the result of the enlargement to the second binarizer 96 (Operation 124).

According to an embodiment of the present invention, unlike the method illustrated in FIG. 8, Operation 46A need not include Operation 122. In this case, the character(s) extractor 14A of FIG. 7 does not include the second sharpness adjuster 92. Therefore, in response to the control signal received from the height comparator 90, when the enlarger 94 determines that the height of the mask is less than the second threshold value $TH_2$, it enlarges the character (s) in the character(s) region. To this end, the enlarger 94 may receive the character(s) line from the mask detector 10 via the input terminal IN6 and the character(s) region and the background region within the scope indicated by the character(s) line from the first sharpness adjuster 12 or the caption region detector 8 via the input terminal IN6.

In response to the control signal received from the height comparator 90, the second binarizer 96 binarizes character(s) enlarged or non-enlarged by the enlarger 94 using a third threshold value $TH_3$ determined for each character(s) line and outputs the result of the binarization as extracted character(s) via an output terminal OUT 3. To this end, the second binarizer 96 receives the character(s) line from the mask detector 10 via the input terminal IN6 and the character(s) region and the background region within the area indicated by the character(s) line from the first sharpness adjuster 12 or the caption region detector 8 via the input terminal IN6.

For example, in response to the control signal, when the second binarizer 96 determines that the height of the mask is not less than the second threshold value $TH_2$, it binarizes the non-enlarged character(s) included in the scope indicated by the character(s) line (Operation 126). However, when the second binarizer 96 determines that the height of the mask is less than the second threshold value $TH_2$ in response to the control signal, it binarizes the enlarged character(s) received from the enlarger 94 (Operation 126).

Until now, only the character(s) region has been mentioned in describing the operation of the character(s) extractor 14A of FIG. 7. However, the background region as well as the character(s) region within the scope indicated by the character(s) line is processed by the second sharpness adjuster 92, the enlarger 94, and the second binarizer 96. In other words, the background region within the scope indicated by the character(s) line is enlarged by the enlarger 94 and binarized by the second binarizer 96.

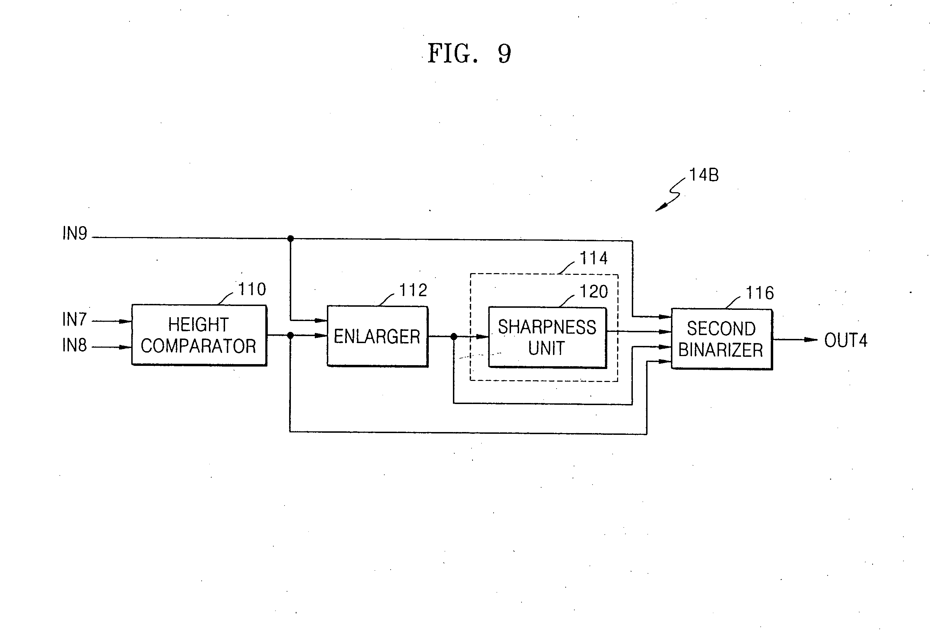

FIG. 9 is a block diagram of character(s) extractor 14B according to another embodiment of the present invention. The character(s) extractor 14B includes a height comparator 110, an enlarger 112, a second sharpness adjuster 114, and a second binarizer 116.

Unlike FIG. 8, when the height of the mask is less than the second threshold value $TH_2$, Operation 124 may be performed instead of Operation 122, Operation 122 may be performed after Operation 124, and Operation 126 may be performed after Operation 122. In this case, the character(s) extractor 14B illustrated in FIG. 9 may be implemented as the character(s) extractor 14 illustrated in FIG. 1.

The height comparator 110 illustrated in FIG. 9 performs the same functions as the height comparator 90 illustrated in FIG. 7. In other words, the height comparator 110 compares a height of a mask received from the mask detector 10 via an input terminal IN7 with the second threshold value $TH_2$ received via an input terminal IN8 and outputs as a control signal a result of the comparison to both the enlarger 112 and the second binarizer 116.

In response to the control signal received from the height comparator 110, when the enlarger 112 determines that the height of the mask is less than the second threshold value $TH_2$, it enlarges the character(s) included in a character(s) region. To this end, the enlarger 112 may receive a character(s) line from the mask detector 10 via an input terminal IN9 and the character(s) region and a background region within a scope indicated by the character(s) line from the first sharpness adjuster 12 or the caption region detector 8 via the input terminal IN9.

The second sharpness adjuster 114 adjusts the character(s) region including character(s) enlarged by the enlarger 112 to be sharper and outputs the character(s) region with adjusted sharpness to the second binarizer 116.

In response to the control signal received from the height comparator 110, the second binarizer 116 binarizes non-enlarged character(s) included in the character(s) region or character(s) included in the character(s) region with its sharpness adjusted by the second sharpness adjuster 114 using the third threshold value $TH_3$, and outputs the result of the binarization as extracted character(s) via an output terminal OUT 4. To this end, the second binarizer 116 receives the character(s) line from the mask detector 10 via the input terminal IN9 and the character(s) region and the background region within the scope indicated by the character(s) line from the first sharpness adjuster 12 or the caption region detector 8 via the input terminal IN9.

For example, in response to the control signal, when the second binarizer 116 determines that the height of the mask is not less than the second threshold value $TH_2$, it binarizes the non-enlarged character(s) included in the scope indicated by the character(s) line. However, when the second binarizer 116 determines that the height of the mask is less than the second threshold value $TH_2$ in response to the control signal, it binarizes the character(s) included in the character(s) region and having its sharpness adjusted by the second sharpness adjuster 114.

Until now, only the character(s) region has been mentioned in describing the operation of the character(s) extractor 14B of FIG. 9. However, the background region as well as the character(s) region within the scope indicated by the character(s) line is processed by the enlarger 112, the second sharpness adjuster 114, and the second binarizer 116. In other words, the background region within the scope indicated by the character(s) line is enlarged by the enlarger 112, processed by the second sharpness adjuster 114 to adjust the character(s) region to be sharper, and binarized by the second binarizer 116.

According to an embodiment of the present invention, unlike FIG. 9, the character(s) extractor 14B need not include the second sharpness adjuster 114. In this case, if the second binarizer 116 determines that the height of the mask is less than the second threshold value $TH_2$ in response to the control signal, it binarizes the character(s) enlarged by the enlarger 112.

According to an embodiment of the present invention, the enlarger 94 or 112 of FIG 7 or 9 may determine the brightness of enlarged character(s) using a bi-cubic interpolation method. The bi-cubic interpolation method is disclosed in "A Simplified Approach to Image Processing," Prentice Hall, pp. 115-120, 1997, by Randy Crane.

A method of determining the brightness of enlarged character(s) using the bi-cubic interpolation method according to an embodiment of the present invention will now be described with reference to the attached drawings. However, the present invention is not limited thereto.

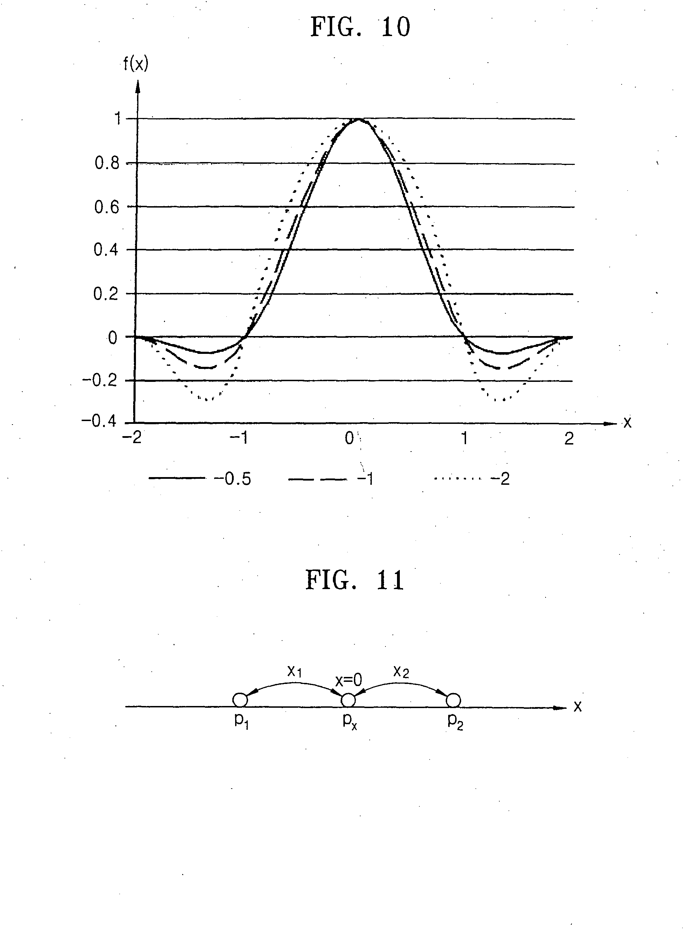

FIG. 10 is an exemplary graph illustrating a cubic function [f(x)] when a cubic coefficient is -0.5, -1, and -2 according to an embodiment of the present invention. Here, the horizontal axis indicates a distance from a pixel to be interpolated, and the vertical axis indicates the value of the cubic function.

FIG. 11 is a one-dimensional graph illustrating an interpolation pixel $p_x$ and neighboring pixels $p_1$ and $p_2$. Here, the interpolated pixel $p_x$ is newly generated as character(s) is enlarged and is a pixel to be interpolated, i.e., a pixel whose brightness should be determined. The neighboring pixel $p_1$ or $p_2$ denotes a pixel neighboring the interpolation pixel $p_x$.

The cubic function illustrated in FIG. 10 is used as a weight function and may be given by, for example,

$$f(x) = \begin{cases} (a+2)\,|x|^3 - (a+3)\,|x|^2 + 1 & 0 \le |x| < 1 \\ (a\,|x|^3 - 5a\,|x|^2 + 8a\,|x| - 4a & 1 \le |x| < 2 \\ 0 & 2 \le |x| \end{cases} \qquad \ldots(2)$$

where a is an integer.

For example, the weight is determined by substituting a distance x1 between the interpolation pixel $p_x$ and the neighboring pixel $p_1$ into Equation 2 instead of x or a weight corresponding to the distance x1 is determined from FIG. 10. Then, the determined weight is multiplied by the brightness, i.e., luminance level, of the neighboring pixel $p_1$. In addition, a weight is determined by substituting a distance x2 between the interpolation pixel $p_x$ and the neighboring pixel $p_2$ into Equation 2 instead of x or a weight corresponding to the distance x2 is determined by FIG. 10. Then, the determined weight is multiplied by the brightness, i.e., luminance level, of the neighboring pixel $p_2$. The results of the multiplication are summed, and the result of the summation is determined to be the luminance level, i.e., brightness, of the interpolation pixel $p_x$.

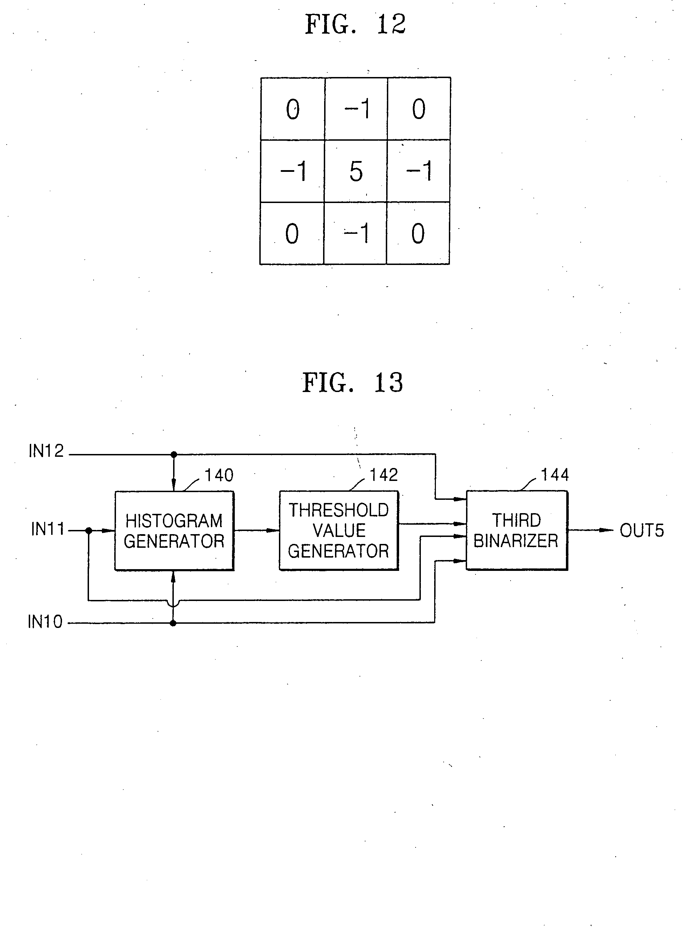

FIG. 12 illustrates a sharpness unit 100 or 120 according to an embodiment of the present invention. The second sharpness adjuster 92 or 112 illustrated in FIG 7 or 9 plays the role of adjusting the small character(s) to be sharper. To this end, the sharpness unit 100 or 120, which emphasizes an edge of an image, may be implemented as the second sharpness adjuster 92 or 114. The edge is a high frequency component of an image.

The sharpness unit 100 or 120 sharpens a character(s) region and a background region in a scope indicated by a character(s) line and outputs the sharpening result. The sharpening on image on the basis of high pass filter is disclosed in "A Simplified Approach to Image Processing," Prentice Hall, pp. 77-78, 1997, by Randy Crane. For example, the sharpness unit 100 or 120 may be implemented as illustrated in FIG. 12.

According to an embodiment of the present invention, the second binarizer 96 or 116 of FIG. 7 or 9 may binarize character(s) using Otsu's method. Otsu's method is disclosed in a paper entitled "A Threshold Selection Method from Gray-scale Histograms," IEEE Trans. Syst Man Cybern., SMC-9(1), pp. 62-66, 1986, by Jun Otsu.

FIG. 13 is a block diagram of the second binarizer 96 or 116 of FIG. 7 or 9 according to an embodiment of the present invention. The second binarizer 96 or 116 includes a histogram generator 140, a threshold value setter 142, and a third binarizer 144.

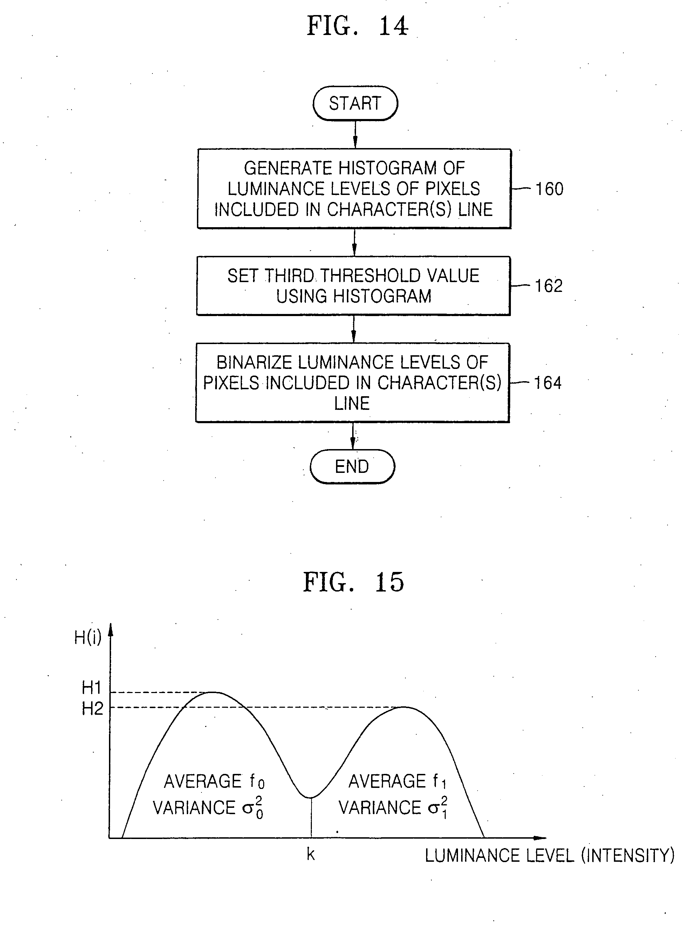

FIG. 14 is a flowchart illustrating a method of operating the second binarizer 96 or 116 according to the present invention. The method includes operations of setting a third threshold value $TH_3$ using a histogram (Operations 160 and 162) and binarizing the luminance level of each pixel (Operation 164).

FIG. 15 is an exemplary histogram according to an embodiment of the present invention, where the horizontal axis indicates luminance level and the vertical axis indicates a histogram [H(i)].

The histogram generator 140 illustrated in FIG. 13 generates a histogram of luminance levels of pixels included in a character(s) line and outputs the histogram to the threshold value setter 142 (Operation 160). For example, in response to the control signal received via an input terminal IN10, if the histogram generator 140 determines that a height of a mask is not less than the second threshold value $TH_2$, it generates a histogram of luminance levels of pixels included in a character(s) region having non-enlarged character(s) and in a background region included in the scope indicated by the character(s) line. To this end, the histogram generator 140 may receive a character(s) line from the mask detector 10 via an input terminal IN11 and a character(s) region and a background region within a scope indicated by the character(s) line from the first sharpness adjuster 12 or the caption region detector 8 via the input terminal IN11.

However, in response to the control signal received via the input terminal IN10, if the histogram generator 140 determines that the height of the mask is less than the second threshold value $TH_2$, it generates a histogram of luminance levels of pixels included in a character(s) region having enlarged character(s) and in a background region belonging to the scope indicated by the character(s) line. To this end, the histogram generator 140 receives a character (s) line from the mask detector 10 via an input terminal IN12 and a character(s) region and a background region within the scope indicated by the character(s) line from the enlarger 94 or the second sharpness adjuster 114 via the input terminal IN12.

For example, the histogram generator 140 may generate a histogram as illustrated in FIG. 15.

After Operation 160, the threshold value setter 142 sets a brightness value, which bisects a histogram which has two peak values received from the histogram generator 140 such that variances of the bisected histogram are maximized, as the third threshold value $TH_3$ and outputs the set third threshold value $TH_3$ to the third binarizer 144 (Operation 162). Referring to FIG. 15, for example, the threshold value setter 142 can set a brightness value k, which bisects the histogram which has two peak values H1 and H2 such that variances $\sigma^2_0$ and $\sigma^2_1$ of the bisected histogram are maximized, as the third threshold value $TH_3$.

After Operation 162, the third binarizer 144 receives a character(s) line input with a scope including non-enlarged character(s) via an input terminal IN11 or a character(s) line with enlarged character(s) input via an input terminal IN12. The third binarizer 144 selects one of the received character(s) lines in response to the control signal input via the input terminal IN10. Then, the third binarizer 144 binarizes the luminance level of each of the pixels included in the character(s) region and the background region included in the scope indicated by the selected character (s) line using the third threshold value $TH_3$ and outputs the result of the binarization via an output terminal OUT5 (Operation 164).

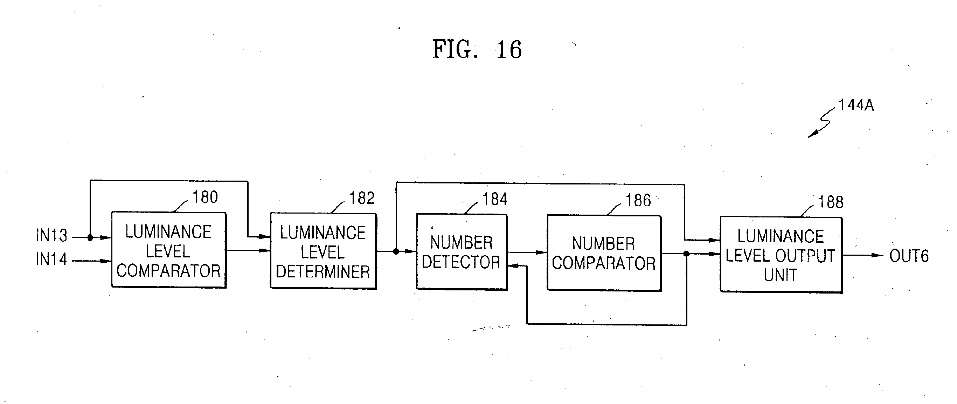

FIG. 16 is a block diagram of a third binarizer 144A according to an embodiment of the present invention. The third binarizer 144A includes a luminance level comparator 180, a luminance level determiner 182, a number detector 184, a number comparator 186, and a luminance level output unit 188.

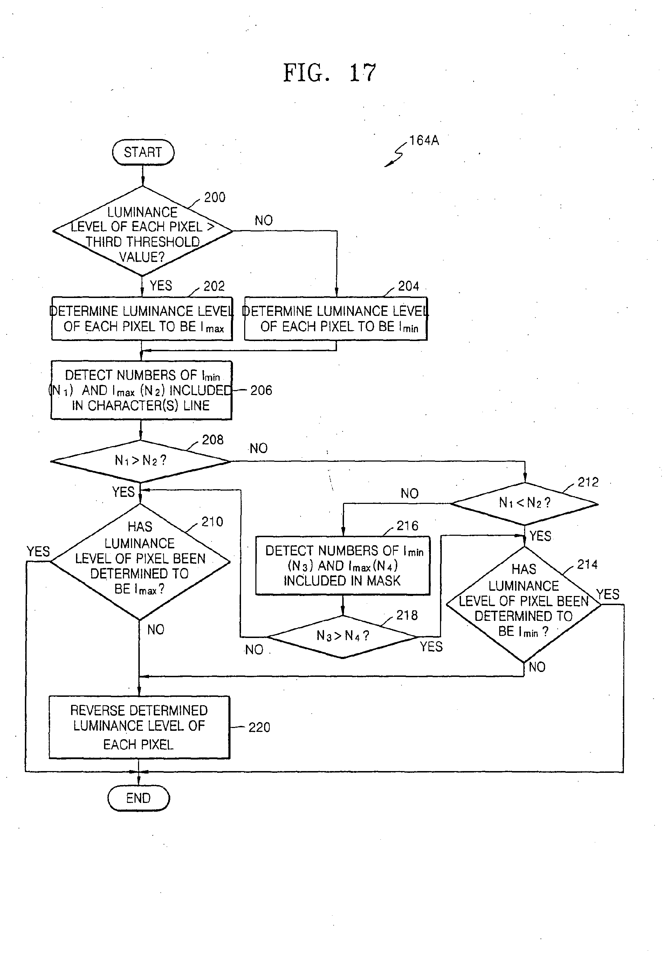

FIG. 17 is a flowchart illustrating Operation 164A according to an embodiment of the present invention. Operation 164A includes operations of determining the luminance level of each pixel (Operations 200 through 204), verifying whether the luminance level of each pixel has been determined properly (Operations 206 through 218), and reversing the determined luminance level of each pixel according to the result of the verification (Operation 220).

The luminance level comparator 180 compares the luminance level of each of the pixels included in a character (s) line with the third threshold value $TH_3$ received from the threshold setter 142 via an input terminal IN14 and outputs the results of the comparison to the luminance level determiner 182 (Operation 200). To this end, the luminance level comparator 180 receives a character(s) line, and a character(s) region and a background region in a scope indicated by the character(s) line via an input terminal IN13. For example, the luminance level comparator 180 determines whether the luminance level of each of the pixels included in the character(s) line is greater than the third threshold value $TH_3$.

In response to the result of the comparison by the luminance level comparator 180, the luminance level determiner 182 determines the luminance level of each of the pixels to be a maximum luminance level (Imax) or a minimum luminance level (Imin) and outputs the result of the determination to both the number detector 184 and the luminance level output unit 188 (Operations 202 and 204). The maximum luminance level (Imax) and the minimum luminance level (Imin) may denote, for example, a maximum value and a minimum value of luminance level of the histogram of FIG. 15, respectively.

For example, if the luminance level determiner 182 determines that the luminance level of pixel is greater than the third threshold value $TH_3$ based on the result of the comparison by the luminance level comparator 180, it determines the luminance level of the pixel input via an input terminal IN13 to be the maximum luminance level (Imax) (Operation 202). However, if the luminance level determiner 182 determines that the luminance level of the pixel is equal to or less than the third threshold value $TH_3$ based on the result of the comparison by the luminance level comparator 180, it determines the luminance level of the pixel input via the input terminal IN13 to be the minimum luminance level (Imin) (Operation 204).

The number detector 184 detects the number of maximum luminance levels (Imaxes) and the number of minimum luminance levels (Imins) included in a character(s) line or a mask and outputs the detected number of maximum luminance levels (Imaxes) and the detected number of minimum luminance levels (Imins) to the number comparator 186 (Operations 206 and 216).

The number comparator 186 compares the number of minimum luminance levels (Imins) with the number of maximum luminance levels (Imaxes) and outputs the result of the comparison (Operations 208, 212, and 218).

In response to the result of the comparison by the number comparator 186, the luminance level output unit 188 bypasses the luminance levels of the pixels determined by the luminance level determiner 182 via an output terminal OUT6 or reverses and outputs the received luminance levels of the pixels via the output terminal OUT6 (Operations 210, 214, and 220).

For example, after Operation 202 or 204, the number detector 184 detects a first number $N_1$, which is the number of maximum luminance levels (Imaxes) included in a character(s) line, and a second number $N_2$, which is the number of minimum luminance levels (Imins) included in the character(s) line, and outputs the detected first and second numbers $N_1$ and $N_2$ to the number comparator 186 (Operation 206).

After Operation 206, the number comparator 186 determines whether the first number $N_1$ is greater than the second number $N_2$ (Operation 208). If it is determined through the comparison result of the number comparator 186 that the first number $N_1$ is equal to the second number $N_2$, the number detector 184 detects a third number $N_3$, which is the number of minimum luminance levels (Imins) included in a mask, and a fourth number $N_4$, which is the number of maximum luminance levels (Imaxes) included in the mask, and outputs the detected third and fourth numbers $N_3$ and $N_4$ to the number comparator 186 (Operation 216).

After Operation 216, the number comparator 186 determines whether the third number $N_3$ is greater than the fourth number $N_4$ (Operation 218). If the luminance level output unit 188 determines through the comparison result of the number comparator 186 that the first number $N_1$ is greater than the second number $N_2$, or the third number $N_3$ is smaller than the fourth number $N_4$, it determines whether the luminance level of pixel included in the character(s) is determined to be the maximum luminance level Imax (Operation 210).

If the luminance level output unit 188 determines that the luminance level of pixel included in the character(s) is not determined to be the maximum luminance level (Imax), it reverses the luminance level of the pixel determined by the luminance level determiner 182 and outputs the reversed luminance level of the pixel via the output terminal OUT6 (Operation 220).
However, if the luminance level output unit 188 determines that the luminance level of the pixel included in the character(s) is determined to be the maximum luminance level (Imax), it bypasses the luminance level of the pixel determined by the luminance level determiner 182. The bypassed luminance level of the pixel is output via the output terminal OUT6.

If the luminance level output unit 188 determines through the comparison result of the number comparator 186 that the first number $N_1$ is smaller than the second number $N_2$, or the third number $N_3$ is greater than the fourth number $N_4$, it determines whether the luminance level of each of the pixels included in the character(s) is determined to be the minimum luminance level (Imin) (Operation 214).

If the luminance level output unit 188 determines that the luminance level of pixel included in the character(s) is not determined to be the minimum luminance level (Imin), it reverses the luminance level of the pixel determined by the luminance level determiner 182. The reversed luminance level of the pixel is output via the output terminal OUT6 (Operation 220).

However, if the luminance level output unit 188 determines that the luminance level of the pixel included in the character(s) is determined to be the minimum luminance level (Imin), it bypasses the luminance level of each of the pixels determined by the luminance level determiner 182 and outputs the bypassed luminance level of the pixel via the output terminal OUT6.

According to another embodiment of the present invention, unlike in the method illustrated in FIG. 17, Operation 164 may not include Operations 212, 216, and 218. In this case, if the first number $N_1$ is not greater than the second number $N_2$, it is determined whether the luminance level of the pixel is determined to be the minimum luminance level (Imin) (Operation 214). This embodiment may be useful when the first number $N_1$ is not the same as the second number $N_2$.

According to another embodiment of the present invention, unlike in the method illustrated in FIG. 17, in Operation 164, when the luminance level of each of the pixels is greater than the third threshold value $TH_3$, the lumi-

nance level of the pixel may be determined to be the minimum luminance level (Imin), and, when the luminance level of each of the pixels is not greater than the third threshold value $TH_3$, the luminance level of the pixel may be determined to be the maximum luminance level (Imax).

After Operation 46, the noise remover 16 removes noise from the character(s) extracted by the character(s) extractor 14 and outputs the character(s) without noise via the output terminal OUT1 (Operation 48).

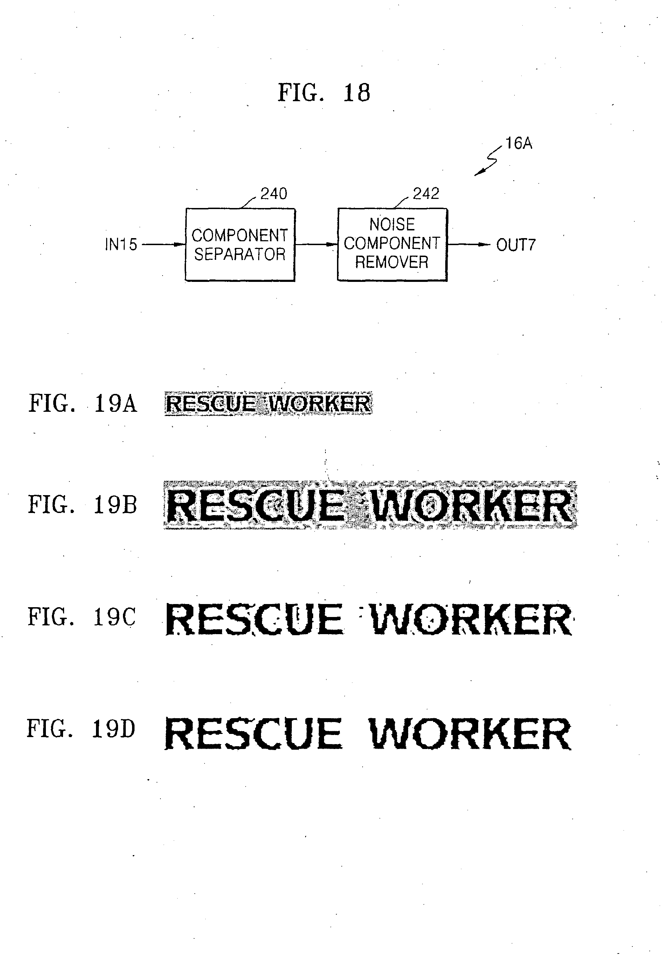

FIG. 18 is a block diagram of a noise remover 16A according to an embodiment of the present invention. The noise remover 16A includes a component separator 240 and a noise component remover 242.

The component separator 240 spatially separates extracted character(s) received from the character(s) extractor 14 via an input terminal IN15 and outputs the spatially separated character(s) to the noise component remover 242. Here, any text consists of components, that is, characters. For example, the text "rescue" can be separated into the individual characters "r," "e," "s," "c," "u," and "e." However, each character may also have a noise component.

According to an embodiment of the present invention, the component separator 240 can separate components using a connected component labelling method. The connected component labelling method is disclosed in a book entitled "Machine Vision," McGraw-Hill, pp. 44-47, 1995, by R. Jain, R. Kastuni, and B.G. Schunck.

The noise component remover 242 removes noise components from the separated components and outputs the result via an output terminal OUT7. To this end, the noise component remover 242 may remove, as noise components, a component including less than a predetermined number of pixels, a component having a region larger than a predetermined region which is a part of the entire region of a character(s) line, or a component having width wider than a predetermined width which is a part of the overall width of the character(s) line. For example, the predetermined number may be 10, the predetermined region may take up 50% of the entire region of the character(s) line, and the predetermined width may take up 90% of the overall width of the character(s) line.

The character(s) whose noise has been removed by the noise remover 16 may be output to, for example, OCR (not shown). The OCR receives and recognizes the character(s) without noise and identifies the contents of an image containing the character(s) using the recognized character(s). Then, through the identification result, the OCR can summarize an image (images), search an image including only the contents desired by a user, or index an image by contents. In other words, the OCR can index, summarize, or search a moving image for a home server/a next-generation PC, which is the video contents management based on contents of the moving image.

Therefore, for example, news can be summarized or searched, an image can be searched, or important sports information can be extracted by using character(s) extracted by an apparatus and method for extracting character(s) from an image according to an embodiment of the present invention.

The apparatus for extracting character(s) from an image according to an embodiment of the present invention need not include the noise remover 16. In other words, the method of extracting character(s) from an image illustrated in FIG. 2 need not include Operation 48. In this case, character(s) extracted by the character(s) extractor 14 is directly output to the OCR.

For a better understanding of the present invention, it is assumed that character(s) in a character(s) region is "rescue worker" and that the character(s) extractor 14A of FIG. 7 is implemented as the character(s) extractor 14 of FIG. 1. Based on these assumptions, the operation of the apparatus for extracting character(s) from an image according to an embodiment of the present invention will now be described with reference to the attached drawings.

FIGS. 19 (a) through (d) illustrate an input and an output of the character(s) extractor 14A and the noise remover 16 of FIG. 7.

The sharpness unit 92 of FIG. 7 adjusts the character(s) region "rescue worker" to be sharper and outputs the character(s) region with adjusted sharpness as illustrated in FIG. 19(a) to the enlarger 94. The enlarger 94 receives and enlarges the character(s) region and the background region illustrated in FIG. 19(a) and outputs the enlarged result illustrated in FIG. 19(b) to the second binarizer 96. The second binarizer 96 receives and binarizes the enlarged result illustrated in FIG. 19(b) and outputs the binarized result illustrated in FIG. 19(c) to the noise remover 16. The noise remover 16 removes noise from the binarized result illustrated in FIG. 19 (c) and outputs the character(s) region without noise as illustrated in FIG. 19 (d) via the output terminal OUT1.

As described above, an apparatus and method for extracting character(s) from an image according to the present invention can recognize even small character(s) with, for example, a height of 12 pixels and with significant and important information of an image. In particular, since character(s) is binarized using a third threshold value $TH_3$ for each character(s) line, the contents of an image can be identified by recognizing extracted character(s). Hence, an image can be more accurately summarized, searched, or indexed according to its contents. Further, faster character(s) extraction is possible since time and spatial information of an image, which is created when detecting a conventional caption region, are used without a caption region detector 8.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. An apparatus for extracting character(s) from an image, comprising:

   a mask detector detecting a height of a mask indicating a character(s) region from spatial information of the image created when detecting a caption region comprising the character(s) region and a background region from the image; and
   a character(s) extractor extracting character(s) from the character(s) region corresponding to the height of the mask,

   wherein the spatial information includes an edge gradient of the image.

2. The apparatus of claim 1, wherein the apparatus further comprises a first sharpness adjuster adjusting the character(s) region to be sharper, and the character(s) extractor extracts the character(s) from the character(s) region with adjusted sharpness.

3. The apparatus of claim 2, wherein the first sharpness adjuster comprises a time average calculator calculating a time average of luminance levels of caption regions having the same character(s), and the character(s) extractor extracts the character(s) from the character(s) region having a luminance level equal to the calculated average.

4. The apparatus of any preceding claim, further comprising a noise remover removing noise from extracted character(s).

5. The apparatus of claim 4, wherein the noise remover comprises:

   a component separator spatially separating components of the extracted character(s); and
   a noise component remover removing a noise component from separated components and outputting character(s) without the noise component.

6. The apparatus of claim 5, wherein the component separator separates the components using a connected component labeling method.

7. The apparatus of claim 5 or 6, wherein the noise component remover removes, as a noise component, a component having less than a predetermined number of pixels, a component having a region larger than a predetermined region which is a part of the entire region of a character(s) line, or a component wider than a predetermined width which is a part of the overall width of the character(s) line, and the character(s) line indicates a width corresponding to the height of the mask as a scope comprising the at least character(s) region in the caption region.

8. The apparatus of any preceding claim, wherein the mask detector comprises:

   a first binarizer binarizing the spatial information using a first threshold value;
   a mask generator generating the mask by removing holes within the character(s) from the binarized spatial information; and
   a line detector outputting the height of the mask and indicating the width corresponding to the height of the mask as a scope of part comprising the at least character(s) region in the caption region.

9. The apparatus of claim 8, wherein the mask generator comprises a morphology filter morphology-filtering the binarized spatial information and outputting the result of the morphology-filtering as the mask.

10. The apparatus of claim 9, wherein the morphology filter generates the mask by performing a dilation method on the binarized spatial information.

11. The apparatus of any one of claims 8 to 10, wherein the character(s) extractor comprises:

   a height comparator comparing the height of the mask to a second threshold value and outputting a control signal as the result of the comparison;
   an enlarger enlarging the character(s) included in the character(s) region in response to the control signal; and
   a second binarizer binarizing the enlarged or non-enlarged character(s) using a third threshold value determined for every character(s) line and outputting the result of the binarization as the extracted character(s) in response to the control signal.

12. The apparatus of claim 11, wherein the character(s) extractor further comprises a second sharpness adjuster adjusting the character(s) region to be sharper in response to the control signal, and the enlarger enlarges the character(s) included in the character(s) region with the sharpness adjusted by the second sharpness adjuster.

13. The apparatus of claim 11, wherein the character(s) extractor further comprises a second sharpness adjuster adjusting the character(s) region having the enlarged character(s) to be sharper, and the second binarizer binarizes the non-enlarged character(s) or the character(s) included in the character(s) region with the sharpness adjusted by the second sharpness adjuster by using the third threshold value determined for every character(s) line and outputting the result of the binarization as the extracted character(s) in response to the control signal.

14. The apparatus of any one of claims 11 to 13, wherein the enlarger determines the brightness of the enlarged character(s) using a bi-cubic interpolation method.

15. The apparatus of any one of claims 11 to 14, wherein the second sharpness adjuster comprises a sharpness unit sharpening the character(s) region and the background region in the scope indicated by the character(s) line and outputting the result of the sharpening.

16. The apparatus of any one of claims 11 to 15, wherein the second binarizer binarizes the character(s) using Otsu's method.

17. The apparatus of any one of claims 11 to 16, wherein the second binarizer comprises:

a histogram generator generating a histogram of luminance levels of pixels included in the character(s) region and the background region in the scope indicated by the character(s) line;
a threshold value setter setting a brightness value, which bisects the histogram which has two peak values such that variances of the bisected histogram are maximized, as the third threshold value; and
a third binarizer selecting a character(s) line having the enlarged character(s) or a character(s) line having the non-enlarged character(s) in response to the control signal, binarizing the luminance level of each of the pixels in the scope indicated by a selected character(s) line by using the third threshold value, and outputting the result of the binarization.

18. The apparatus of claim 17, wherein the third binarizer comprises:

a luminance level comparator comparing the luminance level of each of the pixels with the third threshold value;
a luminance level determiner setting the luminance level of each of the pixels as a maximum luminance level or a minimum luminance level in response to the result of the comparison;
a number detector detecting a number of maximum luminance levels and a number of minimum luminance levels included in the character(s) line;
a number comparator comparing the number of minimum luminance levels and the number of maximum luminance levels; and
a luminance level output unit bypassing the luminance level of each pixel determined by the luminance level determiner or reversing and outputting the luminance level of each pixel determined by the luminance level determiner in response to the result of the comparison by the number comparator.

19. The apparatus of claim 18, wherein the number detector detects the number of maximum luminance levels and the number of minimum luminance levels included in the mask in response to the result of the comparison by the number comparator.

20. A method of extracting character(s) from an image, comprising:

obtaining a height of a mask indicating a character(s) region from spatial information of the image created when detecting a caption region comprising the character(s) region and a background region from the image; and
extracting the character(s) from the character(s) region corresponding to the height of the mask,

wherein the spatial information includes an edge gradient of the image.

21. The method of claim 20, wherein the method further comprises adjusting the character(s) region to be sharper, and the character(s) is extracted from the character(s) region with adjusted sharpness.

22. The method of claim 20 or 21, further comprising removing noise from the extracted character(s).

23. The method of any one of claims 20 to 22, wherein the extracting the character(s) comprises:

determining whether the height of the mask is less than a second threshold value;
enlarging the character(s) included in the character(s) region when it is determined that the height of the mask is less than the second threshold value; and
binarizing the non-enlarged character(s) when it is determined that the height of the mask is not less than the second threshold value, binarizing the enlarged character(s) when it is determined that the height of the mask is less than the second threshold value, and determining the result of the binarization as the extracted character(s).

24. The method of claim 23, wherein the extracting the character(s) further comprises adjusting the character(s) region to be sharper when it is determined that the height of the mask is less than the second threshold value, and the enlarging the character(s) includes enlarging each of the characters included in the character(s) region with the adjusted sharpness.

25. The method of claim 23, wherein the extracting the character(s) further comprises adjusting the character(s) region having the enlarged character(s) after enlarging the character(s) to be sharper, the non-enlarged character(s) is binarized when it is determined that the height of the mask is not less than the second threshold value, character(s) included in the character(s) region with the adjusted sharpness is binarized when it is determined that the height of the mask is less than the second threshold value, and the result of the binarization is determined as the extracted character(s).

26. The method of claim 24, wherein the determining the result of the binarization as the extracted character(s) comprises:

generating a histogram of luminance levels of pixels included in the background region and the character(s) region having the non-enlarged character(s) in a scope indicated by the character(s) line when it is determined that the height of the mask is not less than the second threshold value and generating a histogram of luminance levels of pixels included in the background region and the character(s) region having the enlarged character(s) in the scope indicated by the character(s) line when it is determined that the height of the mask is less than the second threshold value;
setting a brightness value, which bisects the histogram which has two peak values such that variances of the bisected histogram are maximized, as the third threshold value; and
binarizing the luminance level of each of the pixels included in the scope indicated by the character(s) line using the third threshold value,
and the character(s) line indicates a width corresponding to the height of the mask as the scope of part including the at least character(s) region in the caption region.

27. The method of claim 26, wherein the binarizing the luminance level of each of the pixels comprises:

determining whether the luminance level of each of the pixels is greater than the third threshold value;
determining respectively the luminance levels of the pixels to be maximum luminance levels when it is determined that the luminance levels of the pixels are greater than the third threshold value and determining respectively the luminance levels of the pixels to be minimum luminance levels when it is determined that the luminance levels of the pixels are equal to or less than the third threshold value;
detecting a first number, which is a number of minimum luminance levels included in the character(s) line, and a second number, which is the number of maximum luminance levels included in the character(s) line;
determining whether the first number is greater than the second number;
determining whether the luminance levels of the pixels included in the character(s) are determined to be the maximum luminance levels respectively when it is determined that the first number is greater than the second number;

determining whether the luminance levels of the pixels included in the character(s) are determined to be the minimum luminance levels respectively when it is determined that the first number is less than the second number; and

reversing the luminance levels of the pixels included in the character(s) line when it is determined that the luminance levels of the pixels included in the character(s) are not determined to be the maximum luminance levels or the minimum luminance levels.

**28.** The method of claim 26, wherein the binarizing the luminance level of each of the pixels comprises:

determining whether the luminance level of each of the pixels is greater than the third threshold value;

determining respectively the luminance levels of the pixels to be the minimum luminance levels when it is determined that the luminance levels of the pixels are greater than the third threshold value and determining respectively the luminance levels of the pixels to be the maximum luminance levels when it is determined that the luminance levels of the pixels are equal to or less than the third threshold value;

detecting a first number, which is the number of minimum luminance levels included in the character(s) line, and a second number, which is the number of maximum luminance levels included in the character(s) line;

determining whether the first number is greater than the second number;

determining whether the luminance levels of the pixels included in the character(s) are determined to be the maximum luminance levels respectively when it is determined that the first number is greater than the second number;

determining whether the luminance levels of the pixels included in the character(s) are determined to be the minimum luminance level respectively when it is determined that the first number is less than the second number; and

reversing the luminance levels of the pixels included in the character(s) line when it is determined that the luminance levels of the pixels included in the character(s) are not determined to be the maximum luminance levels or the minimum luminance levels.

**29.** The method of claim 27, wherein the binarizing the luminance level of each of the pixel further comprises:

detecting a third number, which is a number of minimum luminance levels included in the mask, and a fourth number, which is a number of maximum luminance levels included in the mask, when it is determined that the first number is equal to the second number;

determining whether the third number is greater than the fourth number;

determining whether the luminance levels of the pixels included in the character(s) are determined to be the minimum luminance levels respectively when it is determined that the third number is greater than the fourth number; and

determining whether the luminance levels of the pixels included in the character(s) are determined to be the maximum luminance levels respectively when it is determined that the third number is less than the fourth number.

# FIG. 1

# FIG. 2

START

DETECT CAPTION REGION FROM IMAGE — 40

DETERMINE HEIGHT OF MASK — 42

ADJUST CHARACTER(S) REGION TO BE SHARPER — 44

EXTRACT CHARACTER(S) FROM CHARACTER(S) REGION — 46

REMOVE NOISE FROM EXTRACTED CHARACTER(S) — 48

END

FIG. 3

FIG. 4A

FIG. 4B

FIG. 4C

EP 1 600 889 A1

FIG. 5A

FIG. 5B

RESCUE WORKER

72

74

FIG. 6

FIG. 7

14A

IN6

IN4
IN5

90
HEIGHT COMPARATOR

92
100
SHARPNESS UNIT

94
ENLARGER

96
SECOND BINARIZER

OUT3

# FIG. 8

46A

START

120

HEIGHT OF MASK < SECOND THRESHOLD VALUE?

NO

YES

ADJUST CHARACTER(S) REGION TO BE SHARPER — 122

ENLARGE CHARACTER(S) — 124

BINARIZE CHARACTER(S) — 126

TO 48

# FIG. 9

IN9

IN7
IN8 → HEIGHT COMPARATOR (110) → ENLARGER (112) → SHARPNESS UNIT (120) [114] → SECOND BINARIZER (116) → OUT4

14B

EP 1 600 889 A1

## FIG. 10

## FIG. 11

## FIG. 12

| 0 | −1 | 0 |
|---|----|---|
| −1 | 5 | −1 |
| 0 | −1 | 0 |

## FIG. 13

```
IN12 ─────────────────────┬──────────────────────────────────────┐
                          │    ╭─140          ╭─142          ╭─144
                          ▼                                  │
IN11 ──┬──►  HISTOGRAM      ──►  THRESHOLD    ──►            │
       │     GENERATOR          VALUE             THIRD       ──►  OUT5
       │                        GENERATOR         BINARIZER
       │                  ▲
IN10 ──┴──────────────────┴──────────────────────────────────┘
```

# FIG. 14

START

GENERATE HISTOGRAM OF
LUMINANCE LEVELS OF PIXELS
INCLUDED IN CHARACTER(S) LINE — 160

SET THIRD THRESHOLD VALUE
USING HISTOGRAM — 162

BINARIZE LUMINANCE LEVELS OF
PIXELS INCLUDED IN CHARACTER(S)
LINE — 164

END

# FIG. 15

$H(i)$

$H1$
$H2$

AVERAGE $f_0$
VARIANCE $\sigma_0^2$

AVERAGE $f_1$
VARIANCE $\sigma_1^2$

$k$

LUMINANCE LEVEL (INTENSITY)

FIG. 16

144A

IN13
IN14

180 — LUMINANCE LEVEL COMPARATOR

182 — LUMINANCE LEVEL DETERMINER

184 — NUMBER DETECTOR

186 — NUMBER COMPARATOR

188 — LUMINANCE LEVEL OUTPUT UNIT

OUT6

# FIG. 17

START

200

LUMINANCE LEVEL OF EACH PIXEL > THIRD THRESHOLD VALUE?

NO

YES 202

DETERMINE LUMINANCE LEVEL OF EACH PIXEL TO BE $I_{max}$

204

DETERMINE LUMINANCE LEVEL OF EACH PIXEL TO BE $I_{min}$

DETECT NUMBERS OF $I_{min}$ ($N_1$) AND $I_{max}$ ($N_2$) INCLUDED IN CHARACTER(S) LINE — 206

208

$N_1 > N_2$?

NO

YES

210

HAS LUMINANCE LEVEL OF PIXEL BEEN DETERMINED TO BE $I_{max}$?

YES

NO

212

$N_1 < N_2$?

NO

216

DETECT NUMBERS OF $I_{min}$ ($N_3$) AND $I_{max}$ ($N_4$) INCLUDED IN MASK

218

$N_3 > N_4$?

NO

YES

YES

214

HAS LUMINANCE LEVEL OF PIXEL BEEN DETERMINED TO BE $I_{min}$?

YES

NO

REVERSE DETERMINED LUMINANCE LEVEL OF EACH PIXEL — 220

END

164A

FIG. 18

16A

240

IN15 → COMPONENT SEPARATOR → NOISE COMPONENT REMOVER → OUT7

242

FIG. 19A  RESCUE WORKER

FIG. 19B  RESCUE WORKER

FIG. 19C  RESCUE WORKER

FIG. 19D  RESCUE WORKER

## EUROPEAN SEARCH REPORT

**European Patent Office**

Application Number

EP 05 25 0250

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KEECHUL JUNG ET AL: "Text information extraction in images and video: a survey" PATTERN RECOGNITION ELSEVIER UK, vol. 37, no. 5, May 2004 (2004-05), pages 977-997, XP004496837 ISSN: 0031-3203 | 1-10,17, 20-23 | G06T5/00 G06K9/20 |
| Y | Available online on www.sciencedirect.com since 21 January 2004 * abstract; figure 5; tables 1,2 * * page 979, left-hand column, paragraph 3 - page 981, left-hand column, paragraph 1 * * page 981, right-hand column, paragraph 6 - page 985, right-hand column, paragraph 2 * * page 989, left-hand column, paragraph 4 - page 991, left-hand column, paragraph 1 * | 11-16, 24-26 | |
| | ----- | | |
| X | XIAOOU TANG ET AL: "A spatial-temporal approach for video caption detection and recognition" IEEE TRANSACTIONS ON NEURAL NETWORKS IEEE USA, vol. 13, no. 4, July 2002 (2002-07), pages 961-971, XP002324859 ISSN: 1045-9227 | 1-4, 20-23 | |
| Y | * abstract; figure 10 * * page 961, right-hand column, paragraph 4 * * page 965, right-hand column, paragraph 2 - page 969, left-hand column, paragraph 1 * | 11-16, 24-26 | |

**TECHNICAL FIELDS SEARCHED (Int.Cl.7)**

G06T
G06K

-----

-/--

The present search report has been drawn up for all claims

| Place of search | Date of completion of the search | Examiner |
|---|---|---|
| Munich | 25 April 2005 | Müller, M |

**European Patent Office**

# EUROPEAN SEARCH REPORT

Application Number

EP 05 25 0250

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WONG E K ET AL: "A new robust algorithm for video text extraction" PATTERN RECOGNITION, ELSEVIER, KIDLINGTON, GB, vol. 36, no. 6, June 2003 (2003-06), pages 1397-1406, XP004410163 ISSN: 0031-3203 | 1,20 | |
| A | * abstract; figure 3 * * page 1399, left-hand column, paragraph 2 - page 1402, right-hand column, paragraph 1 * | 17,26 | |
| A | US 6 496 609 B1 (WALTER ANDREW GORDON NEIL) 17 December 2002 (2002-12-17) * abstract * * column 1, line 12 - line 58 * | 14 | |
| A | MADHVANATH S ET AL: "Holistic verification of handwritten phrases" IEEE TRANSACTIONS ON PATTERN ANALYSIS AND MACHINE INTELLIGENCE IEEE COMPUT. SOC USA, vol. 21, no. 12, December 1999 (1999-12), pages 1344-1356, XP002324860 ISSN: 0162-8828 * page 1349, right-hand column, paragraph 2 * | 5,7 | **TECHNICAL FIELDS SEARCHED (Int.Cl.7)** |
| A | US 2003/093384 A1 (DURST ROBERT T ET AL) 15 May 2003 (2003-05-15) * paragraph [0097] * | 5,7 | |

-/--

The present search report has been drawn up for all claims

| Place of search | Date of completion of the search | Examiner |
|---|---|---|
| Munich | 25 April 2005 | Müller, M |

EPO FORM 1503 03.82 (P04C01)

**European Patent Office**

**EUROPEAN SEARCH REPORT**

Application Number

EP 05 25 0250

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHONG-WAH NGO ET AL: "Structuring lecture videos for distance learning applications" MULTIMEDIA SOFTWARE ENGINEERING, 2003. PROCEEDINGS. FIFTH INTERNATIONAL SYMPOSIUM ON DEC. 10-12, 2003, PISCATAWAY, NJ, USA,IEEE, 10 December 2003 (2003-12-10), pages 215-222, XP010674285 ISBN: 0-7695-2031-6 * abstract; figure 4 * * page 5, left-hand column * ----- | 17,26 | |

TECHNICAL FIELDS
SEARCHED (Int.Cl.7)

The present search report has been drawn up for all claims

| Place of search | Date of completion of the search | Examiner |
|---|---|---|
| Munich | 25 April 2005 | Müller, M |

EPO FORM 1503 03.82 (P04C01)

### ANNEX TO THE EUROPEAN SEARCH REPORT
### ON EUROPEAN PATENT APPLICATION NO.

EP 05 25 0250

This annex lists the patent family members relating to the patent documents cited in  the above-mentioned European search report.
The members are as contained in the European Patent Office EDP file on
The European Patent Office is in no way liable for these particulars which are merely  given for the purpose of information.

25-04-2005

| Patent document cited in search report | | Publication date | Patent family member(s) | | Publication date |
|---|---|---|---|---|---|
| US 6496609 | B1 | 17-12-2002 | GB | 2343579 A | 10-05-2000 |
| US 2003093384 | A1 | 15-05-2003 | US | 2001011276 A1 | 02-08-2001 |
| | | | US | 5933829 A | 03-08-1999 |
| | | | AU | 7375098 A | 27-11-1998 |
| | | | AU | 7475798 A | 27-11-1998 |
| | | | AU | 8484398 A | 10-02-1999 |
| | | | BR | 9809252 A | 27-06-2000 |
| | | | BR | 9811463 A | 12-09-2000 |
| | | | CA | 2286587 A1 | 12-11-1998 |
| | | | CA | 2286707 A1 | 12-11-1998 |
| | | | CA | 2295981 A1 | 28-01-1999 |
| | | | EP | 0983661 A1 | 08-03-2000 |
| | | | EP | 0983664 A1 | 08-03-2000 |
| | | | EP | 1012690 A2 | 28-06-2000 |
| | | | JP | 2002501644 T | 15-01-2002 |
| | | | JP | 2001526857 T | 18-12-2001 |
| | | | JP | 2003524806 T | 19-08-2003 |
| | | | US | 6434561 B1 | 13-08-2002 |
| | | | WO | 9851036 A1 | 12-11-1998 |
| | | | WO | 9851035 A1 | 12-11-1998 |
| | | | WO | 9904326 A2 | 28-01-1999 |
| | | | US | 6108656 A | 22-08-2000 |

EPO FORM P0459

For more details about this annex : see Official Journal of the European Patent Office, No. 12/82